# EUROPEAN PATENT SPECIFICATION

(11) **EP 1 099 288 B1**
(45) Date of publication and mention of the grant of the patent: **15.05.2013**
(21) Application number: 98937148.9
(22) Date of filing: 24.07.1998
(51) Int. Cl.: H02H 9/04, G06F 1/26

(54) **UNIVERSAL SURGE PROTECTOR FOR NOTEBOOK COMPUTERS**
UNIVERSELLER ÜBERSPANNUNGSSCHUTZ FÜR RECHNER DES NOTEBOOKTYPS
PROTECTION UNIVERSELLE CONTRE LES SURTENSIONS POUR ORDINATEURS PORTABLES

(43) Date of publication of application: 16.05.2001
(73) Proprietor: American Power Conversion Corporation, West Kingston, RI 02892 (US)
(72) Inventor: MANNING, William, R., Littleton, MA 01460 (US); BELL, Ronnie, L., Nashua, NH 03060 (US); VEINO, Clint, Londonderry, NH 03052 (US)
(74) Representative: Mintz Levin Cohn Ferris Glovsky and Popeo LLP
(86) International application number: PCT/US1998/015492
(87) International publication number: WO 2000/005798

(56) References cited:
- EP-A- 0 239 863
- US-A- 4 860 185

## Description

### FIELD

The inventions presented herein relate to method and apparatus for the diverting of harmful electrical voltage and current disturbances on alternating current ("AC") power lines supplying power to portable personal computers, hereinafter referred to as "notebook computers," a "notebook" or "notebooks."

### BACKGROUND

Generally, manufacturers and/or re-sellers of notebook computers powered by a 16 volt direct current ("dc") battery, for example, make available to their customers a power adapter to produce a 16 volt dc output from different rated alternating current ("AC") power services available from public or private electric power utility companies. For example, a power adapter generates the 16 volt dc voltage to run a notebook from a 120 volt, 60 cycles per second ("cps") power service commonly available throughout the Untied States at a wall mounted outlet in most homes and places of business. In addition, the power adapter simultaneously re-charges the notebook's battery. The power adapters also produce the required 16 volt dc voltage from AC power sources used in other countries of the world including: a 100 VAC. 50 cps, rated service used in Japan; and a 240 volt 50 cps rated service used in Europe, Asia, the Middle East, South America and Africa.

It is known among manufacturers of notebooks to locate a power adapter inside the housing of a notebook. For brevity, the following discussion is limited to power adapters which are external to the notebook housing. The housing for an external power adapter is generally rectangular in shape and about the size of a audio cassette tape. Characteristically, power adapters include both AC and dc power cords. The dc power cord is anchored at one end to the power adapter and has a female dc plug at a free end for mating with a male dc receptacle mounted in the notebook housing. The AC power cord is a removable, specialized, electrical extension cord. The AC power cord has a two wire female AC plug at one end for mating with a male AC receptacle mounted in the housing of the power adapter and a two wire male AC plug at its other end for coupling to an AC power service at a standard female AC receptacle, wall mounted, for example.

Detachable AC power cords are available from or through notebook manufacturers. These AC power cords include the required male AC plug needed to fit the unique configuration of a female AC power receptacle of the AC power utility of a given country or region of the world. Consequently, an international traveler is advised to bring as many AC power cords having country specific AC plugs as required for mating with the unique mating connector of each power utility encountered on a multi-country trip.

An additional consideration for notebook computer owners is an electrical surge protector for notebooks to protect their notebooks from harmful electrical disturbances such as voltage and current transients which can damage a notebook. A damaged notebook normally means the owner looses the use of the notebook for getting productive work done. Harmful electrical disturbances occur on AC power lines for several well-known reasons including switching ON or OFF an electric motor or a circuit breaker carrying large electrical currents. Lightening strikes of AC power lines during electrical storms are another well-known cause for harmful electrical disturbances appearing on AC power lines.

Protection of notebooks from the foregoing and other harmful electrical disturbances is a concern to users of notebook computers regardless of the country or utility district in which a notebook is operated. In the United States, Underwriters Laboratories ("UL"), an electrical product safety standard setting and testing organization, provides criteria for evaluating the performance of surge protectors, when coupled to a 120 VAC rated AC power service. Specifically, the UL 1449 standard sets forth: (1) a let-through voltage criteria and (2) an effective clamping voltage criteria. Each test criteria is useful for evaluating the performance of surge protector equipment intended to guard notebook computers from harmful electrical AC line disturbances.

An example of circuit arrangement for the protection of a load against overvoltage is described in EP 0,239,863. An example of an apparatus for providing uninterrupted DC and AC power for a desktop personal computer is described in US 4,860,185.

A main component of prior art surge protectors for use with notebooks coupled to a 120 volt rated AC power service is a metal oxide varistor ("MOV") or other voltage and current diverting and absorbing semiconductor devices, such as, transorbs and sidactors. A MOV is the diverting and absorbing semiconductor device used in the majority of prior art surge protectors to protect notebooks from harmful electrical disturbances. A typical prior art surge protector employs a single MOV in combination with a fuse to protect notebook from harmful electrical disturbances

Therefore, a first aspect of the present surge protector is to improve the performance of surge protectors for use with notebook computers by designing them to achieve an effective clamping voltage of 330 volt, while coupled to an AC power service rated from about 100 to about 120 volts, which is the best clamping voltage rating under the UL 1449 standard.

Accordingly, an important aspect of the present surge protector is to improve the level. of protection for notebooks from harmful electrical disturbances over that achieved by prior, art surge protectors, while coupled to AC power services rated from about 100 to about 120 VAC which substantially achieves the UL 1449 standard 330, volt best clamping voltage and a low let-through voltage.

Another significant aspect of the present surge protector is the universal ability to protect a notebook from harmful electrical disturbances appearing on an AC power line in nearly every developed country and in many undeveloped countries, of the world.

Still another novel aspect of the present surge protector is that it employs two, differently rated, MOVs for protecting a notebook wherein a first, higher rated MOV protects a notebook while the surge protector is coupled to a high rated 240 VAC power service and a second, lower rated MOV protects the notebook while the surge protector is coupled to a lower rated AC power service of from about 100 to about 120 VAC.

Yet another aspect of this surge protector is that it includes a switch comprising a switching circuit which automatically connects a lower rated MOV across an AC power line when the AC power line is coupled to a lower rated AC power service and automatically disconnects the lower rated MOV from the AC power line when the AC power line is coupled to a higher voltage service leaving the higher rated MOV to protect a load, such as a notebook.

### SUMMARY

The present surge protector overcomes the limitations of existing surge protectors used with notebooks to the benefit of international travelers who carry notebooks along with them into countries having different rated AC power utilities. As pointed out above, an important aspect of the present surge protector is the ability to use a single surge protector unit to protect a notebook in multiple countries each having differently rated AC power services or, within one country having two or more differently rated AC power services. Specifically, the present surge protector is operable to protect notebooks when they are coupled to either a high rated AC voltage source, such as 240 VAC, 50 or 60 cps, or a low rated AC voltage source, such as a 100 or 120 VAC. 50 or 60 cps AC power service. The surge protector offers protection for notebooks while coupled to AC power services rated from about 70 VAC to about 290 VAC.

The ability to protect notebooks when coupled to variously rated AC power sources is achieved by organizing the surge protector into two parts or sections. A first section of the surge protector includes a first MOV for protecting a notebook from electrical disturbances appearing on an AC power line coupled to a 240 volt AC power service. A second section, coupled in parallel with the first section, includes a second MOV for protecting a notebook from electrical disturbances appearing on an AC power line coupled to an AC power service rated from 100 to 120 VAC. Consequently, the single surge protector described herein is useable, for example, successively in Japan, the United States and Canada which offer low AC power services rated at 100 and 120 VAC, respectively, and in various European, Asian, African and South American countries which offer high AC power services rated at 240 VAC.

Both sections of the present surge protector are automatically selected to protect a power adapter and associated notebook when the AC power line is coupled to a low rated AC power source, for example, a 120 VAC rated AC power service. Only the first section of the surge protector is selected to protect the power adapter and notebook when the AC power line is coupled to a high rated AC power service, for example, a 240 VAC rated power service. A switch within the second section of the surge protector includes an electrical-mechanical relay which automatically connects the second MOV across an AC power line when the line is coupled to a low rated AC power service and automatically disconnects the MOV from the AC power line when the line is coupled to a high rated AC power service.

The two MOVs, relay and other electrical components of the surge protector are mounted on a printed circuit board ("PCB") and are coupled to one another by conductive tracings on the PCB. The particulars of the surge protector circuits are given below.

The surge protector disclosed herein is contained in a small housing large enough to hold the above-described PCB and all the components carried by the PCB further including a male AC receptacle for mating with a female AC plug at one end of an AC power cord. Under normal operating conditions, the housing is not noticeably warm to the touch when the surge protector is coupled to AC power services rated form 100 to 240 VAC.

### THE DRAWINGS

The foregoing and other aspects of the disclosed surge protector will be apparent from a reading of the specification with reference to the drawings which are:
Fig. 1 is a schematic diagram of a portable personal computer, or notebook, showing the disclosed AC to dc voltage converter system, including a power adapter and a surge protector, ready to be coupled to a notebook and an AC power cord ready to be coupled to a wall mounted. female AC receptacle, representative of an AC power service.
Fig. 2 is an electrical circuit of a two part, or section, universal surge protector for protecting a notebook from electrical disturbances associated with power lines coupled to differently rated AC power services.
Fig. 3 is a circuit diagram of a switching circuit comprising the switch used in the second section of the two part surge protector of Figs. 1 an d 2 to connect and disconnect the second MOV to an AC power line.

### DETAILED DESCRIPTION

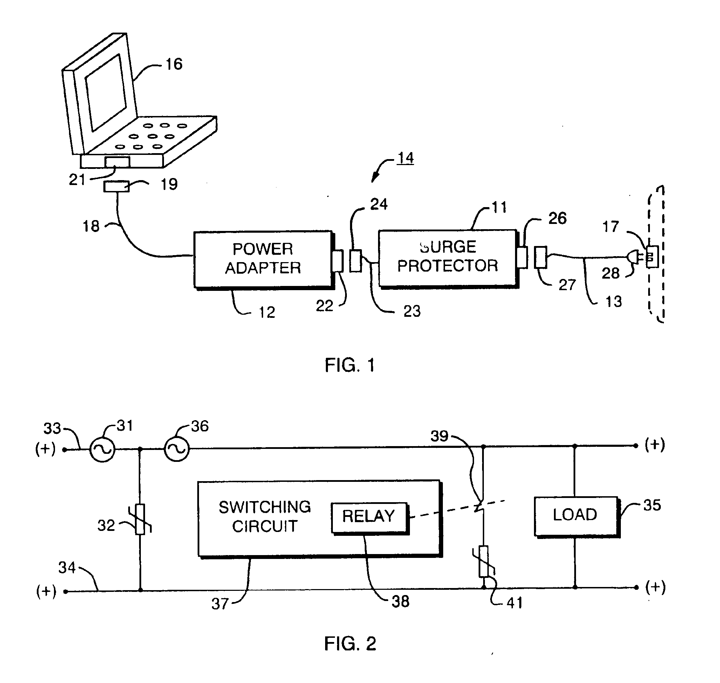

With reference to Fig. 1, the universal power surge protector 11, the power adapter 12 and the AC power cord 13 comprise an AC to dc voltage converter system 14 for supplying a dc voltage to notebook computer 16 generated from an AC power source represented by the wall mounted female receptacle 17. The notebook 16 is representative of present day notebooks available from several manufacturers, for example: IBM®, Compaq®, Dell®, Hewlett-Packard® and Apple® Computer and many others. Certain currently marketed notebooks are designed for portable operation from a dc 16 volt battery, for example, stored inside (and outside) the computer housing or are designed for a tethered, stationary operation from a dc 16 volt output, for example, generated by a power adapter from an AC power service available, by means of the proper AC power cord, at the wall mounted female receptacle 17.

A power adapter, typically, includes a switching power supply that produces a fixed dc voltage output, 16 volts, for example, from several differently rated AC power services including those rated at 100, 120, 208 and 240 VAC, at 50 or 60 cps. The operation and design of switching power supplies used by power adapters intended for use with notebooks are well understood in the art. Detailed information on the design and operation of switching power supplies is available in data sheets and other product information obtainable from the above-identified notebook manufactures or their re-sellers.

Power adapter 12 includes a dc output cord 18 permanently connected at one end to a printed circuit board inside the power adapter housing and connected, at a free end, to a dc female plug 19 for mating with a recessed male dc receptacle 21 mounted within the housing of the notebook. A recessed, two pin AC male receptacle 22 is mounted in the power adapter housing for coupling directly to an AC power line via an AC power cord 13 or through the surge protector 11 and its AC power cord 23.

The AC power cord 23 of the surge protector includes a female AC plug 24 at one end for mating with the male AC receptacle 22 of the power adapter. The other end of cord 23 is coupled to a printed circuit board ("PCB") within the surge protector housing. The surge protector also includes a two pin, male AC receptacle 26 mounted within its housing. AC power cord 13 includes an AC female plug 27 at one end for mating with either the male AC receptacle 26 of the surge protector or the male AC receptacle 22 of the power adapter 12. The male AC plug 28 at the other end of cord 13 is configured to mate with a United States standard female AC power line receptacle 17, shown mounted in a wall of a room within an office building or home, for example. Of course, a power cord 13 must include an appropriately configured male plug 28 for mating with the specific standard design of an AC power line receptacle employed in each country, or AC power service region, within which the user intends to use a notebook computer.

It should be apparent that female AC receptacles 22 and 26 mounted in the housings of the power adapter and surge protector, respectively, are identical and that the female AC plug 24 at the free end of cord 23 is identical to female AC plug 27 at one end of AC power cord 13. Consequently, a power adapter can be coupled directly to an AC power source by power cord 13 when a surge protector is not available to protect a notebook from harmful electrical disturbances.

As stated above, the surge protector includes the two sections shown in Fig. 2. The first section of the surge protector includes a slow acting fuse 31 and a first high voltage MOV 32 coupled in series and in parallel, respectively, with the line 33 and neutral 34 sides of an AC power line. Slow acting fuse 31 protects the notebook, the power adapter, and the surge protector, in particular MOV 32, from a sustained over current condition on AC power line 33 created, for example, by a short circuit occurring at any of the foregoing three devices. Fuse 31 protects the three devices by changing from an electrical conductor to an open circuit to disconnect and, thereby, electrically isolate the notebook, power adapter and the surge protector from the AC power line under a short circuit condition existing in one of the three devices.

MOV 32 protects the power adapter and notebook against electrical voltage disturbances by diverting disturbances from the devices and by absorbing energy associated with the disturbances that, for example, exceed the maximum allowable voltage rating of MOV 32, which is 300 VAC. Absent large AC line disturbances, the impedance of MOV 32 is in the megohm range which effectively appears as an open circuit between the line 33 and neutral 34 sides of an AC power line coupled to a 240 VAC rated AC power service. MOV 32 switches to low impedance levels in response to large voltage disturbances appearing across the line 33 and neutral 34 sides of the AC power line. At the low impedance levels, MOV 32 diverts the electrical disturbances away from a notebook 16 and power adapter 12 and absorbs a portion of the energy associated with the disturbance.

The second section of surge protector 11 includes thermal fuse 36 and a second, lower rated MOV 41. Fuse 36 is selected for specifications which are compatible with MOV 41 in order to disconnect the surge protector, power adapter and notebook from the AC power line in the event MOV 41 goes into a thermal run-a-way condition in response to a significant sustained electrical disturbance.

The second section of the surge protector also includes a switching circuit 37 for adding or connecting and removing or disconnecting MOV 41 across the line 33 and neutral 34 sides of the AC power line. The switching circuit includes an electro-mechanical relay 38 which has a coil and a moveable conductive arm. The moveable arm is in an open circuit position when the relay coil is not energized and is in a closed circuit position when the coil is energized. Consequently, MOV 41 is coupled across the line 33 and neutral 34 sides of an AC power line when the relay coil of relay 38 is energized, and is disconnected from the AC power line when the relay coil of relay 38 is not energized. The switching circuit 37 energizes the relay coil to couple MOV 41 across the AC power line while the AC power line is coupled to a 100 to 120 VAC rated power service. The switching circuit prevents, that is, inhibits, the energizing of the relay coil of relay 38 while the AC power line is coupled to a 240 VAC rated AC power service.

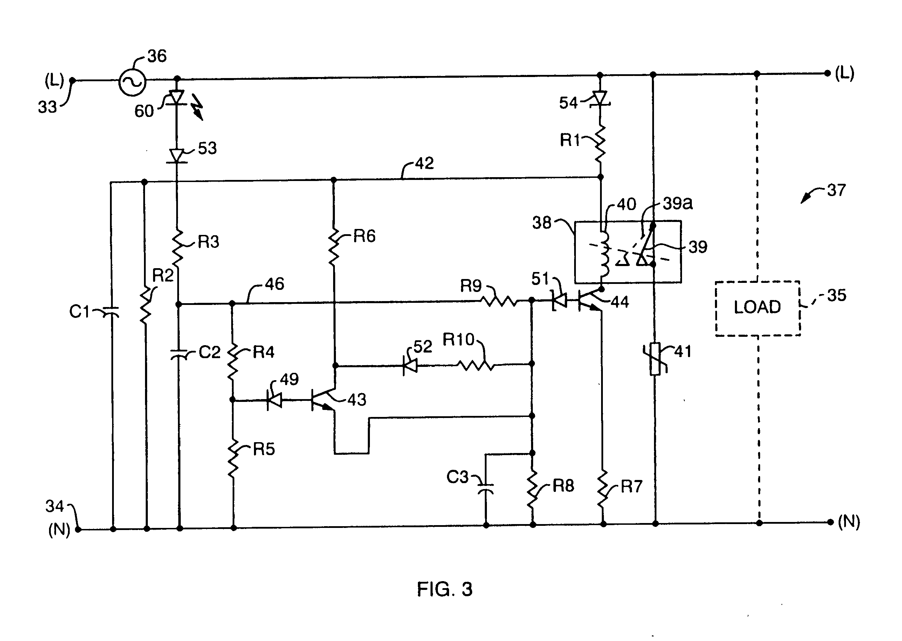

Turning to Fig. 3, MOV 41 is coupled between the line 33 and neutral 34 sides of an AC power line when the moveable contact switch arm 39 of relay 38 is at the closed circuit arm position represented by solid line 39. The relay arm is at the closed circuit position while the coil 40 of relay 38 is energized from a 100 to a 120 VAC rated AC power service. The moveable contact arm moves to and stays at the closed circuit position 39 while transistor 44 is turned ON, enabling current to flow through relay coil 40. While transistor 44 is OFF, no current flows through relay coil 40 and the relay arm moves to its open circuit position represented by relay arm 39A, shown with a dashed line. With arm 39 at the open circuit position, MOV 41 is disconnected from across the AC power line.

Relay coil 40 is automatically energized by transistor 44 when the surge protector is coupled to an AC power service rated from 100 to 120 VAC. Transistor 44 is prevented from being turned ON by transistor 43 when the surge protector is coupled to an AC rated power service rated at 240 VAC.

The switching of transistor 44 ON and OFF occurs as follows. The collector electrodes of transistors 43 and 44 are coupled to the dc voltage on the first dc bus or rail 42. The rail voltage is, substantially, a steady state voltage to which capacitor C1 is charged by diode 54, a half wave voltage rectifier coupled between the line 33 and neutral 34 sides of the AC power line by resistors R1 and R2 and capacitor C1. The voltage on rail 42 is coupled to the collector of transistor 44 through relay coil 40 and is coupled to the collector of transistor 43 through resistor R6. The emitter electrodes of transistors 43 and 44 are at a voltage potential slightly above that of the neutral side 34 of the AC power line to which the emitter of both transistors are coupled through resistor R7.

The base electrodes of transistors 43 and 44 are coupled to a second dc rail 46. The voltage of rail 46 is, substantially, the steady state voltage to which capacitor C2 is charged by half wave voltage rectifier diode 53 coupled between the line 33 and neutral 34 sides of the AC power line, by resistor R3 and capacitor C2 and by resistors R3, R4, R5, R8 and R9. Resistors R4 and R5 establish a fixed bias to the cathode of zener diode 49 and resistors R7 and R8 establish a fixed bias to the cathode of zener diode 51.

The automatic switch or switching circuit 37 operates as follows when coupled to a 100 to 120 VAC rated power service: at 100 or 120 VAC, the dc potential on rail 46 is not adequate to bias the base of transistor 43, through zener diode 49, to turn ON transistor 43. However, the dc potential on rail 46 is adequate to bias the base of transistor 44, through zener diode 51. to turn transistor 44 ON. With transistor 44 ON, current flows through the relay coil 40. causing the relay arm 39 to move from its normally open circuit position represented by arm 39A to the closed circuit position represented by arm 39. Upon arm 39 moving to its closed circuit position, MOV 41 is connected across the line 33 and neutral 34 sides of the AC power line to protect the load 35 from harmful electrical disturbances as long as the AC power line is coupled to a 100 to 120 VAC rated AC power service. Typically, load 35 comprises a power adapter 12 coupled to a notebook 16 or another load type.

Energizing relay coil 40 to connect MOV 41 across the load 35 when the surge protector is coupled to a 100 to 120 VAC rated AC power service is preferred to energizing coil 40 when the surge protector is coupled to a 240 VAC rated power service. The reason is that the 240 VAC approach results in an inefficient use of energy and makes it more difficult to dissipate heat generated in the electrical components of the surge protector.

The automatic switching circuit or switch 37 operates as follows when coupled to a 240 VAC rated AC power service: the dc potential on rail 46 is adequate to bias the base electrodes of both transistors 43 and 44 through the above noted resistors and zener diodes to turn ON both of the transistors. However, transistor 43 is turned ON first in time and, once ON, prevents or disables transistor 44 from turning ON. Transistor 43 is turned ON before transistor 44 because the time required to charge capacitor C3 to the voltage level at which zener diode 51 conducts, turning ON transistor 44, is longer than the time required for zener diode 49 to conduct and bias ON transistor 43. With transistor 43 turned ON and transistor 44 OFF, the potential at the collector of transistor 43 is only slightly above that of neutral 34. This low voltage is coupled from the collector of transistor 43 through diode 52 and resistor R10 to the cathode of zener diode 51 preventing the zener diode from conducting and turning transistor 44 ON. With transistor 43 ON. transistor 44 stays OFF and no current flows through relay coil 40 causing the relay arm to remain at the open circuit position represented by relay arm 39A. Consequently, MOV 41 is not connected across the line 33 and neutral sides 34 of the AC power line. At this time, MOV 32 in the first section of the surge protector protects the notebook by diverting harmful electrical disturbances from a notebook and absorbing portions of the energy of the disturbance.

In one embodiment, resistor R2 and capacitor C1 are implemented in a three level ladder network with the capacitance of capacitor C1 comprising the combined capacitance of three series connected capacitors. The resistance of resistor R2 is the combined resistance of three series connected resistors. Each end of the three resistors and three capacitors are electrically coupled together to form the ladder network. The ladder network enables the voltage drop across each of the capacitors to be evenly distributed making the voltage on rail 42 more stable.

Also, in the foregoing embodiment, resistors R1, R3 and R6 are each implemented as three separate series connected resistors. The use of multiple series resistors in place of one enables I² R producing heat created in the resistors while coupled to an AC power service to be dissipated over a larger resistor surface area and over a wider area on the PCB carrying the resistor and other circuit components of surge protector 12.

The division of the specific identified resistors of Fig. 3 into separate resistors increases the total resistance surface area for dissipating heat. Locating the multiple resistors at spaced locations over the surface of the PCB avoids hot spots and helps lower the temperature on the outside of the surge protector housing. The outside surface temperature of the surge protector housing is near that of the ambient temperature when the surge protector is coupled form a AC power service rated from about 100 to about 240 VAC.

The surge protector, while coupled to a 120 VAC rated power service. achieved an effective clamping voltage of 330 volts which is the UL1449 standard best rating when tested with a 6000 V. 500 amp, 100 kHz. Catagory A combined surge, defined by American National Standards Institute ("ANSI") procedure C62.41. In addition, the present surge protector achieved a let-through voltage of 161 VAC when subjected to a 6000 V, 200 amp 100 kHz. Category A ringwave test. The let-through voltage is the difference between the clamping voltage and the standard peak voltage of 169 for a 120 VAC rated power service.

The values of the resistors and capacitors and the identity of the transistors and the MOVs employed in surge protector 12 are listed in TABLE 1 below. Light emitting diode ("LED") 60 shown in Fig. 3 emits a green light whenever the surge protector is coupled to an AC power service to indicate that it is available for protecting against harmful disturbances on the AC power line.

**TABLE A**

| Component | Type/Rating | Component | Type/Rating |
|---|---|---|---|
| FUSE 31 | MINI, UL, CA | LED 60 | Green |
| | 4A/250V | | R/A PCMNT |
| FUSE 36 | Thermal | RI | Resistor |
| | 4A/100°C | a | 1.2kΩ. 1W, 5% RC2512 |
| | 520-0005 | b | " |
| | | c | " |
| | | | Σ= 3.6 kΩ |
| MOV 32 | ERZV14D471 | | |
| | 125 J, 300Vrms | | |
| | | R2 | |
| | | a | 470kΩ, 1/8 W, 5%, RC1206 |
| | | b | " |
| MOV41 | ERZV20D201 | c | " |
| | 100 J, 130Vrms | | Σ= 1.41 MΩ |
| | | R3 | |
| | | a | 10k Ω ,5%, 1W, RAD, RES, MOF |
| | | b | " |
| Diodes | | c | " |
| 52, 53 and 54 | 1A, 1000V, SMA | | Σ= 30kΩ |
| | | R4 | 30kΩ, 1/4 W, 5% |
| Zener | 6.8V, 225MW | | RC2010 |
| Diode 49 | SMD | | |
| | | R5 | 7.5 kΩ, 1/8 W, 5% |
| Zener | | | |
| Diode 51 | 9.1V, 225W | | |
| | SMD | R6 | |
| | | a | 56kΩ, 1W, 5%, RC2512 |
| Capacitor C1 | AL, ELECT, 85c | b | " |
| (a) | 10 uf, 100V | c | " |
| (b) | 10 uf, 100V | | |
| (c) | 10 uf, 100V | | |
| | | R7 | 56Ω, 1/8 W, 5% |
| | | | RC 1206 |
| Capacitor C2 | 10uf, 100V | | |
| | AL, ELECT, 85c | | |
| | | R8 | 110 kΩ, 1/8 W, 5% |
| | | | RC1206 |
| Capacitor C3 | 22uf, 25V | | |
| | C 6 - 3×4-5 | R9 | 68k Ω, 1/8 W, 5% |
| | | | RC1206 |
| Relay 38 | 48 Vdc Coil | R10 | 2.7 kΩ, 1/8 W, 5% |
| | 120 V/10A | | RC1206 |
| Transistor 43 | MMBTA42LT1 | | |
| | Motorola | | |
| Transistor 44 | FMMT458 | | |
| | Zetex | | |

## Claims

1. A universal surge protector (11) for protecting a portable notebook computer (16) ("notebook") and an associated power adapter (12) from harmful electrical disturbances occurring on an alternating current ("AC") power line when the notebook is powered by a direct current ("DC") battery voltage generated by a power adapter while coupled to an AC power service over the line and neutral sides of an AC power line, the surge protector (11) comprising a first voltage and current diverting and absorbing semiconductor device (41) ("diverting and absorbing device") having a first voltage rating and a controllable switch (39) whereby the first diverting and absorbing device (41) and the controllable switch (39) are coupled in series across the line and neutral sides of the AC power line, **characterised in that**
the surge protector further comprises a second voltage and current diverting and absorbing semiconductor device (32) coupled across the line and neutral sides of the AC power line, the second diverting and absorbing device (32) having a voltage rating higher than the first diverting and absorbing device (41) for protecting the notebook (16) and power adapter (12) from harmful electrical disturbances while the surge protector is coupled to a higher rated AC power service by the AC power line; and
the lower rated first diverting and absorbing device (41) for diverting harmful electrical disturbances from the notebook and power adapter and wherein the controllable switch (39) is for coupling the lower rated first diverting and absorbing device (41) across the line and neutral sides of the AC power line in parallel with the higher rated diverting and absorbing device (32) for protecting the notebook (16) and power adapter (12) from harmful electrical disturbances while the surge protector is coupled to a lower rated AC power service by the AC power line.

2. The surge protector of claim 1 wherein the higher and lower diverting and absorbing devices (32, 41) include metal oxide varistors (MOVs).

3. The surge protector of claim 1 or claim 2 wherein the diverting and absorbing devices include transorbs.

4. The surge protector of claim 1 or claim 2 wherein diverting and absorbing devices include sidators.

5. The surge protector of any preceding claim wherein the switch couples the lower rated diverting and absorbing device across an AC power line while the AC power line is coupled to a lower rated AC power source and de-couples the lower rated diverting and absorbing devices from across the AC power line while the AC power line is coupled to a higher rated AC power service.

6. The surge protector of claim 5 wherein the switch includes a switching circuit (37) responsive to voltages of a lower rated AC power service to couple the lower rated diverting and absorbing device across an AC power line and responsive to voltages of a higher rated AC power service to de-couple the lower rated diverting and absorbing device from across an AC power line.

7. The surge protector of any preceding claim wherein the lower rated diverting and absorbing device protects the notebook (16) and power adapter (12) from harmful electrical disturbances while coupled to an AC power service rated from about 100 to about 120 VAC.

8. The surge protector of any preceding claim wherein the lower rated absorbing and diverting device is coupled between the lower rated diverting and absorbing device and a protected notebook (16) and power adapter (12).

9. The surge protector of any of claims 1 to 7 wherein the lower rated absorbing and diverting device is coupled between the higher rated diverting and absorbing device and a protected notebook (16) and a power adapter (12).

10. The surge protector of any preceding claim wherein the switch includes an electro-mechanical relay (38) including a moveable conductive contact (39) having a closed circuit position (39) for coupling the lower rated diverting and absorbing device across the line and neutral sides of an AC power line while coupled to a low rated AC power service for enabling the lower rated and higher rated diverting and absorbing devices to divert harmful electrical disturbances away from a notebook (16) and power adapter (12).

11. The surge protector of any of claims 1 to 9 wherein the switch includes an electro-mechanical relay including a moveable conductive contact having an open circuit position (39A) for de-coupling the lower rated diverting and absorbing device from across the line and neutral sides of an AC power line when coupled to a high rated AC power service leaving the high rated diverting and absorbing device to divert harmful electrical disturbances away from a notebook (16) and power adapter (12).

12. The surge protector of any of claims 1 to 9 wherein the switch includes an electro-mechanical relay having a moveable conductive portion having a closed circuit switch position for coupling the lower rated diverting and absorbing device across the line and neutral sides of an AC power line for the high and low rated diverting and absorbing devices to divert harmful electrical disturbances away from a notebook and power adapter while the surge protector is coupled to a low rated AC power service and
the relay having a moveable conductive portion having an open circuit position for decoupling the lower rated diverting and absorbing device from across the line and neutral sides of an AC power for the high rated diverting and absorbing device to divert harmful electrical disturbances away from a notebook and power adapter while the surge protector is coupled to high rated AC power service.

13. The surge protector of claim 12 wherein the switch (37) further includes a first transistor coupled to the relay (38)
for switching the moveable conductive portion of the relay to its closed circuit position when the first transistor is turned ON when the surge protector is coupled to a low rated AC power service and
for switching the moveable conductive portion of the relay to its open circuit position when the first transistor is turned OFF when the surge protector is coupled to a high rated AC power service.

14. The surge protector of claim 13 wherein the switch further includes a second transistor coupled to the first transistor for preventing the first transistor from turning ON to move the conductive portion of the relay to its closed circuit position when the surge protector is coupled over an AC power line to the high rated AC power service.

## Patentansprüche

1. Universeller Überspannungsschutz (11) zum Schützen eines tragbaren Notebook-Computers (16) ("Notebook") und eines zugehöriges Netzteils (12) vor schädlichen elektrischen Störungen, die in einer Wechselstrom("AC")-Leistungsleitung auftreten, wenn das Notebook durch eine von einem Netzteil erzeugte Gleichstrom ("DC")-Batteriespannung versorgt wird, während es mit einem AC-Leistungsservice über die Leitungs- und Nullleiterseite einer AC-Leistungsleitung gekoppelt ist, wobei der Überspannungsschutz (11) eine erste eine Spannung und einen Strom ableitende und absorbierende Halbleitervorrichtung(41) ("ableitende und absorbierende Vorrichtung") mit einer ersten Nennspannung und einen steuerbaren Schalter (39) aufweist, wobei die erste ableitende und absorbierende Vorrichtung (41) und der steuerbare Schalter (39) in Reihe über die Leitungs- und Nullleiterseite der AC-Leistungsleitung gekoppelt sind, **dadurch gekennzeichnet, dass**
der Überspannungsschutz ferner eine zweite eine Spannung und einen Strom ableitende und absorbierende Halbleitervorrichtung (32) aufweist, die mit der Leitungs- und Nullleiterseite der AC-Leistungsleitung gekoppelt ist, wobei die zweite ableitende und absorbierende Vorrichtung (32) eine Nennspannung aufweist, die höher als die der ersten ableitenden und absorbierenden Vorrichtung (41) zum Schützen des Notebooks (16) und des Netzteils (12) vor schädlichen elektrischen Störungen ist, während der Überspannungsschutz mit einem AC-Leistungsservice mit höherer Nennleistung durch die AC-Leistungsleitung gekoppelt ist; und
die erste ableitende und absorbierende Vorrichtung (41) mit niedrigerer Nennleistung zum Ableiten schädlicher elektrischer Störungen von dem Notebook und dem Netzteil und wobei der steuerbare Schalter (39) zum Koppeln der ersten ableitenden und absorbierenden Vorrichtung (41) mit niedrigerer Nennleistung mit der Leitungs- und Nullleiterseite der AC-Leistungsleitung parallel mit der ableitenden und absorbierenden Vorrichtung (32) mit höherer Nennspannung zum Schützen des Notebooks (16) und des Netzteils (12) vor schädlichen elektrischen Störungen ausgebildet ist, während der Überspannungsschutz mit einem AC-Leistungsservice mit niedrigerer Nennleistung durch die AC-Leistungsleitung gekoppelt ist.

2. Überspannungsschutz nach Anspruch 1, wobei die höhere und niedrigere ableitende und absorbierende Vorrichtung (32, 41) Metalloxid-Varistoren (MOVs) aufweisen.

3. Überspannungsschutz nach Anspruch 1 oder Anspruch 2, wobei die ableitende und absorbierende Vorrichtung Transzorbdioden aufweist.

4. Überspannungsschutz nach Anspruch 1 oder Anspruch 2, wobei die ableitende und absorbierende Vorrichtung Sidactoren aufweist.

5. Überspannungsschutz nach einem der vorhergehenden Ansprüche, wobei der Schalter die ableitende und absorbierende Vorrichtung mit niedrigerer Nennleistung mit einer AC-Leistungsleitung koppelt, während die AC-Leistungsleitung mit einer AC-Leistungsquelle mit niedrigerer Nennleistung gekoppelt ist, und die ableitende und absorbierende Vorrichtung mit niedrigerer Nennleistung von der AC-Leistungsleitung trennt, während die AC-Leistungsleitung mit einem AC-Service mit höherer Nennleistung gekoppelt ist.

6. Überspannungsschütz nach Anspruch 5, wobei der Schalter einen Schaltkreis (37) aufweist, der auf Spannungen einer AC-Leistungsquelle mit niedrigerer Nennleistung zum Koppeln der ableitenden und absorbierenden Vorrichtung mit niedrigerer Nennleistung mit einer AC-Leistungsleitung reagiert und auf Spannungen einer AC-Leistungsquelle mit höherer Nennleistung zum Trennen der ableitenden und absorbierenden Vorrichtung mit niedrigerer Nennleistung von einer AC-Leistungsleitung reagiert.

7. Überspannungsschutz nach einem der vorherigen Ansprüche, wobei die ableitende und absorbierende Vorrichtung mit niedrigerer Nennleistung das Notebook (16) und Netzteil (12) vor schädlichen elektrischen Störungen schützt, während es mit einer AC-Leistungsquelle verbunden ist, die sich von ungefähr 100 bis ungefähr 120 V Wechselspannung bemisst.

8. Überspannungsschutz nach einem der vorherigen Ansprüche, wobei die absorbierende und ableitende Vorrichtung mit niedrigerer Nennleistung zwischen der ableitenden und absorbierenden Vorrichtung mit niedrigerer Nennleistung und einem geschützten Notebook (16) und Netzteil (12) gekoppelt ist.

9. Überspannungsschutz nach einem der Ansprüche 1 bis 7, wobei die absorbierende und ableitende Vorrichtung mit niedrigerer Nennleistung zwischen der ableitenden und absorbierenden Vorrichtung mit höherer Nennleistung und einem geschützten Notebook (16) und einem Netzteil (12) gekoppelt ist.

10. Überspannungsschutz nach einem der vorhergehenden Ansprüche, wobei der Schalter ein elektromechanisches Relais (38) aufweist, das einen beweglichen leitenden Kontakt (39) mit einer geschlossenen Schaltstellung (39) zum Koppeln der ableitenden und absorbierenden Vorrichtung mit niedrigerer Nennleistung mit der Leitungs- und Nullleiterseite einer AC-Leistungsleitung aufweist, während es mit einem AC-Leistungsservice mit niedriger Nennleistung gekoppelt ist, um es der ableitenden und absorbierenden Vorrichtung mit niedrigerer Nennleistung und höherer Nennleistung zu ermöglichen, schädliche elektrische Störungen von einem Notebook (16) und einem Netzteil (12) wegzuleiten.

11. Überspannungsschutz nach einem der Ansprüche 1 bis 9, wobei der Schalter ein elektromechanisches Relais aufweist, das einen beweglichen leitenden Kontakt mit einer offenen Schaltstellung (39A) zum Trennen der ableitenden und absorbierenden Vorrichtung mit niedrigerer Nennleistung von der Leitungs- und Nullleiterseite einer AC-Leistungsleitung aufweist, wenn es mit einem AC-Leistungsservice mit hoher Nennleistung gekoppelt ist, der aus der ableitenden und absorbierenden Vorrichtung mit hoher Nennleistung austritt, um schädliche elektrische Störungen weg von einem Notebook (16) und Netzteil (12) wegzuleiten.

12. Überspannungsschutz nach einem der Ansprüche 1 bis 9, wobei der Schalter ein elektromechanisches Relais aufweist, das einen beweglichen leitenden Abschnitt mit einer geschlossenen Schalterstellung zum Koppeln der ableitenden und absorbierenden Vorrichtung mit niedrigerer Nennleistung mit der Leitungs- und Nullleiterseite einer AC-Leistungsleitung für die ableitende und absorbierende Vorrichtung mit hoher und niedriger Nennleistung zum Ableiten von schädlichen elektrischen Störungen weg von einem Notebook und einem Netzteil, während der Überspannungsschutz mit einem AC-Leistungsservice mit niedriger Nennleistung gekoppelt ist, und
wobei das Relais einen beweglichen leitenden Abschnitt mit einer offenen Schalterstellung zum Trennen der ableitenden und absorbierenden Vorrichtung mit niedrigerer Nennleistung von der Leitungs- und Nullleiterseite einer AC-Leistung aufweist, damit die ableitende und absorbierende Vorrichtung mit hoher Nennleistung schädliche elektrische Störungen von einem Notebook und Netzteil wegleitet, während der Überspannungsschutz mit dem AC-Leistungsservice mit hoher Nennleistung gekoppelt ist.

13. Überspannungsschutz nach Anspruch 12, wobei der Schalter (37) ferner einen mit dem Relais (38) gekoppelten Transistor
zum Schalten des beweglichen leitenden Abschnitts des Relais in seine geschlossene Schaltstellung aufweist, wenn der erste Transistor angeschaltet ist, wenn der Überspannungsschutz mit einem AC-Leistungsservice mit niedriger Nennleistung gekoppelt ist, und
zum Schalten des beweglichen leitenden Abschnitts des Relais in seine offene Schaltstellung aufweist, wenn der erste Transistor ausgeschaltet ist, wenn der Überspannungsschutz mit einem AC-Leistungsservice mit hoher Nennleistung gekoppelt ist.

14. Überspannungsschutz nach Anspruch 13, wobei der Schalter ferner einen mit dem ersten Transistor gekoppelten zweiten Transistor zum Verhindern des Einschaltens des ersten Transistors aufweist, um den leitenden Abschnitt des Relais in seine geschlossene Schaltstellung zu bewegen, wenn der Überspannungsschutz über eine AC-Leistungsleitung mit dem AC-Leistungsservice mit hoher Nennleistung gekoppelt ist.

## Revendications

1. Parasurtenseur universel (11) pour protéger un ordinateur portable (16) (« ordinateur portable ») et un adaptateur secteur (12) associé de perturbations électriques nuisibles apparaissant sur une ligne électrique alternative (« AC ») lorsque l'ordinateur portable est alimenté par une tension de batterie continue (« DC ») générée par un adaptateur secteur alors qu'il est couplé à un réseau d'alimentation alternatif des côtés de ligne et de neutre d'une ligne électrique alternative, le parasurtenseur (11) comprenant un premier dispositif semi-conducteur détournant et absorbant une tension et un courant (41) (« dispositif détournant et absorbant ») ayant une première tension assignée et un commutateur pouvant être commandé (39), moyennant quoi le premier dispositif détournant et absorbant (41) et le commutateur pouvant être commandé (39) sont couplés en série entre les côtés de ligne et de neutre de la ligne électrique alternative, **caractérisé en ce que**
le parasurtenseur comprend en outre un deuxième dispositif semi-conducteur détournant et absorbant une tension et un courant (32) couplé entre les côtés de ligne et de neutre de la ligne électrique alternative, le deuxième dispositif détournant et absorbant (32) ayant une tension assignée plus élevée que celle du premier dispositif détournant et absorbant (41) pour protéger l'ordinateur portable (16) et l'adaptateur secteur (12) de perturbations électriques nuisibles alors que le parasurtenseur est couplé à un réseau d'alimentation alternatif de valeur assignée plus élevée par la ligne électrique alternative ; et
le premier dispositif détournant et absorbant (41) de valeur assignée plus faible pour détourner des perturbations électriques nuisibles de l'ordinateur portable et de l'adaptateur secteur et dans lequel le commutateur (39) sert à coupler le premier dispositif détournant et absorbant (41) de valeur assignée plus faible entre les côtés de ligne et de neutre de la ligne électrique alternative en parallèle avec le dispositif détournant et absorbant (32) de valeur assignée plus élevée pour protéger l'ordinateur portable (16) et l'adaptateur secteur (12) de perturbations électriques nuisibles alors que le parasurtenseur est couplé à un réseau d'alimentation alternatif de valeur assignée plus faible par la ligne électrique alternative.

2. Parasurtenseur selon la revendication 1, dans lequel les dispositifs détournant et absorbant (32, 41) de valeurs assignées plus élevée et plus faible comprennent des varistances à oxyde métallique (MOV).

3. Parasurtenseur selon la revendication 1 ou la revendication 2, dans lequel les dispositifs détournant et absorbant comprennent des transorbs.

4. Parasurtenseur selon la revendication 1 ou la revendication 2, dans lequel les dispositifs détournant et absorbant comprennent des sidators.

5. Parasurtenseur selon l'une quelconque des revendications précédentes, dans lequel le commutateur couple le dispositif détournant et absorbant de valeur assignée plus faible à une ligne électrique alternative alors que la ligne électrique alternative est couplée à une source de puissance alternative de valeur assignée plus faible et désaccouple les dispositifs détournant et absorbant de valeur assignée plus faible de la ligne électrique alternative alors que la ligne électrique alternative est couplée à un réseau d'alimentation alternatif de valeur assignée plus élevée.

6. Parasurtenseur selon la revendication 5, dans lequel le commutateur comprend un circuit de commutation (37) sensible aux tensions d'un réseau d'alimentation alternatif de valeur assignée plus faible pour coupler le dispositif détournant et absorbant de valeur assignée plus faible à une ligne électrique alternative et sensible aux tensions d'un réseau d'alimentation alternatif de valeur assignée plus élevée pour désaccoupler le dispositif détournant et absorbant de valeur assignée plus faible d'une ligne électrique alternative.

7. Parasurtenseur selon l'une quelconque des revendications précédentes, dans lequel le dispositif détournant et absorbant de valeur assignée plus faible protège l'ordinateur portable (16) et l'adaptateur secteur (12) de perturbations électriques nuisibles alors qu'il est couplé à un réseau d'alimentation alternatif de valeur assignée d'environ 100 à environ 120 VAC.

8. Parasurtenseur selon l'une quelconque des revendications précédentes, dans lequel le dispositif absorbant et détournant de valeur assignée plus faible est couplé entre le dispositif détournant et absorbant de valeur assignée plus faible et un ordinateur portable (16) et un adaptateur secteur (12) protégés.

9. Parasurtenseur selon l'une quelconque des revendications 1 à 7, dans lequel le dispositif absorbant et détournant de valeur assignée plus faible est couplé entre le dispositif détournant et absorbant de valeur assignée plus élevée et un ordinateur portable (16) et un adaptateur secteur (12) protégés.

10. Parasurtenseur selon l'une quelconque des revendications précédentes, dans lequel le commutateur comprend un relais électromécanique (38) comprenant un contact conducteur mobile (39) ayant une position de circuit fermé (39) pour coupler le dispositif détournant et absorbant de valeur assignée plus faible entre les côtés de ligne et de neutre d'une ligne électrique alternative alors qu'il est couplé à un réseau d'alimentation alternatif de valeur assignée faible pour permettre aux dispositifs détournant et absorbant de valeur assignée plus faible et de valeur assignée plus élevée de détourner des perturbations électriques nuisibles d'un ordinateur portable (16) et d'un adaptateur secteur (12).

11. Parasurtenseur selon l'une quelconque des revendications 1 à 9, dans lequel le commutateur comprend un relais électromécanique comprenant un contact conducteur mobile ayant une position de circuit ouvert (39A) pour désaccoupler le dispositif détournant et absorbant de valeur assignée plus faible des côtés de ligne et de neutre d'une ligne électrique alternative lorsqu'il est couplé à un réseau d'alimentation alternatif de valeur assignée élevée, laissant le dispositif détournant et absorbant de valeur assignée élevée détourner des perturbations électriques nuisibles d'un ordinateur portable (16) et d'un adaptateur secteur (12).

12. Parasurtenseur selon l'une quelconque des revendications 1 à 9, dans lequel le commutateur comprend un relais électromécanique comportant une partie conductrice mobile ayant une position de commutateur de circuit fermé pour coupler le dispositif détournant et absorbant de valeur assignée plus faible entre les côtés de ligne et de neutre d'une ligne électrique alternative pour que les dispositifs détournant et absorbant de valeurs assignées élevée et faible détournent des perturbations électriques nuisibles d'un ordinateur portable et d'un adaptateur secteur alors que le parasurtenseur est couplé à un réseau d'alimentation alternatif de valeur assignée faible, et
le relais ayant une partie conductrice mobile ayant une position de circuit ouvert pour désaccoupler le dispositif détournant et absorbant de valeur assignée plus faible des côtés de ligne et de neutre d'une ligne électrique alternative pour que le dispositif détournant et absorbant de valeur assignée élevée détourne des perturbations électriques nuisibles d'un ordinateur portable et d'un adaptateur secteur alors que le parasurtenseur est couplé à un réseau d'alimentation alternatif de valeur assignée élevée.

13. Parasurtenseur selon la revendication 12, dans lequel le commutateur (37) comprend en outre un premier transistor couplé au relais (38)
pour commuter la partie conductrice mobile du relais vers sa position de circuit fermé, lorsque le premier transistor est mis à l'état passant lorsque le parasurtenseur est couplé à un réseau d'alimentation alternatif de valeur assignée faible, et
pour commuter la partie conductrice mobile du relais vers sa position de circuit ouvert lorsque le premier transistor est mis à l'état bloqué lorsque le parasurtenseur est couplé à un réseau d'alimentation alternatif de valeur assignée élevée.

14. Parasurtenseur selon la revendication 13, dans lequel le commutateur comprend en outre un deuxième transistor couplé au premier transistor pour empêcher le premier transistor de devenir passant pour déplacer la partie conductrice du relais vers sa position de circuit fermé lorsque le parasurtenseur est couplé sur une ligne électrique alternative au réseau d'alimentation alternatif de valeur assignée élevée.
